# EUROPEAN PATENT APPLICATION

(11) **EP 4 668 892 A1**
(43) Date of publication of application: **24.12.2025**
(21) Application number: 24757308.2
(22) Date of filing: 16.02.2024
(51) Int. Cl.: H04W 52/02, H04B 7/06, H04B 7/08, H04W 52/14, H04W 52/36, H04W 76/28, H04L 5/00

(54) **METHOD AND APPARATUS FOR TRANSMITTING AND RECEIVING SIGNAL IN WIRELESS COMMUNICATION SYSTEM**

(30) Priority: 16.02.2023 KR 20230021068; 24.02.2023 KR 20230025356
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); YANG, Suckchel, Seoul 06772 (KR); PARK, Haewook, Seoul 06772 (KR)
(74) Representative: Mooser, Sebastian Thomas
(86) International application number: PCT/KR2024/095290
(87) International publication number: WO 2024/172590

(57) **Abstract**

A methods and an apparatus for transmitting and receiving a signal in a wireless communication system, disclosed in the present specification, perform CSI reporting. The CSI reporting comprises a plurality of sub-reports, wherein the sub-reports may be for different power offset values and/or number of APs.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

An object of the present disclosure is to provide a signal transmission and reception method and a device therefor for efficiently transmitting and receiving a reference signal and a measurement report in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system. According to an aspect of the present disclosure, a method of transmitting and receiving a signal by a user equipment (UE) in a wireless communication system includes receiving a channel state information (CSI) reporting configuration, receiving a CSI-reference signal (CSI-RS) on a CSI-RS resource based on the CSI reporting configuration, and transmitting a CSI report based on a measurement result for the CSI-RS, wherein, based on the CSI report including sub-reports, in deriving a channel quality indicator (CQI) of each of the sub-reports, a ratio of a physical downlink shared channel (PDSCH) energy per resource element (EPRE) to CSI-RS EPRE for the CSI-RS resource is assumed to be equal to a difference between a first parameter and a second parameter, and based on that the CSI report does not include the sub-reports, in deriving the CQI of the CSI report, the ratio of the PDSCH EPRE to the CSI-RS EPRE for the CSI-RS resource is assumed to be a value of the first parameter.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to an embodiment of the present disclosure, when a reference signal and a measurement report are transmitted and received between communication devices, there is an advantage in that more efficient signal transmission and reception may be performed through operations differentiated from the related art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

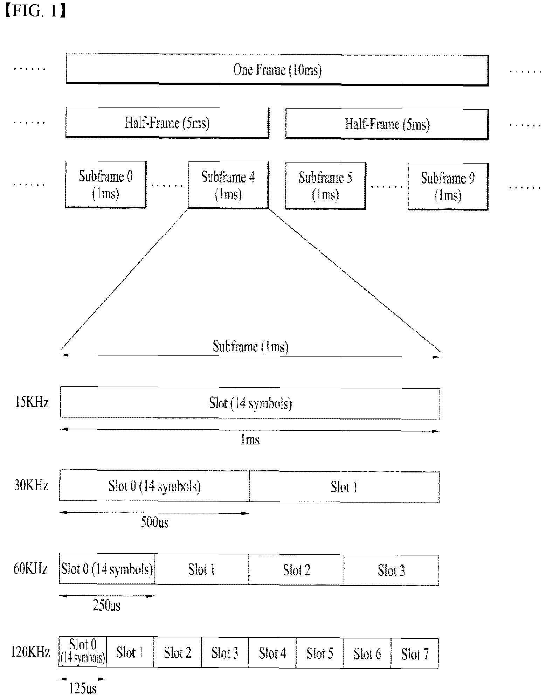

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{sym} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

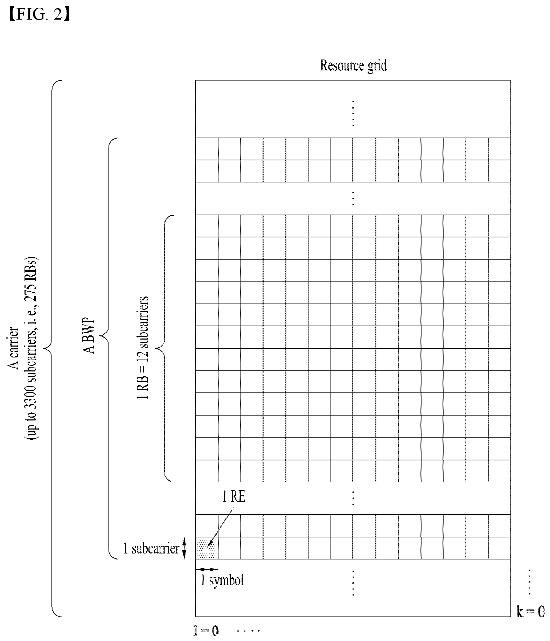

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

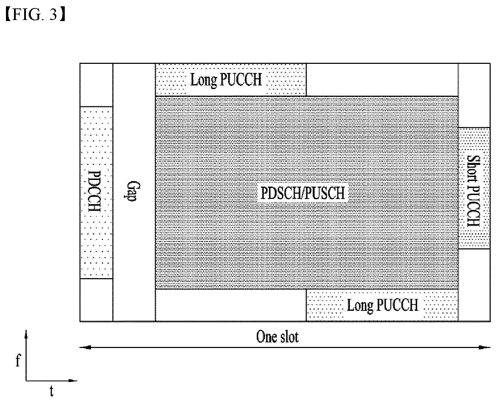

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### ] (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

### (1) PDSCH

APDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

### 1. Multiple CSI reporting for energy saving

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Energy saving of BSs has been considered as an important issue in wireless communication systems including 3GPP because it may contribute to establish eco-friendly networks by reducing carbon emissions and reducing the operational expenditure (OPEX) of communication service providers. In particular, as the introduction of 5G communications requires higher transmission rates, BSs need to be equipped with more antennas and provide services through wider bandwidths and frequency bands. This results in BS energy costs reaching as high as 20 % of total OPEX, according to recent researches. Due to this increased interest in BS energy saving, a new study item called "study on network energy savings" is approved in 3GPP NR release 18.

In detail, to improve the energy saving capability of the BS in terms of transmission and reception, the following enhancement techniques have been considered in the corresponding item.
- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information

In this specification, a method of saving BS energy on the time axis by reducing transmission of common signals/channels such as synchronization signal/PBCH block (SSB)/system information block1 (SIB1)/other system information (SI)/paging, and the like or by adjusting a transmission cycle.

This specification considers a scenario in which a BS receives a CSI report for a plurality of antenna ports (APs) and/or a plurality of power offsets at once and obtains network energy saving (NES) benefits by controlling the number of APs to use or controlling transmit power when transmitting downlink signals/channels to a UE. The BS may reduce the number of APs or reduce transmit power based on the reported CSI. Therefore, energy saving (ES) gain may be obtained by controlling unnecessary parts of antenna element (AE) and/or transmit power. For example, the BS configures the UE to transmit, in a single CSI report, CSI information assuming multiple APs (e.g., 64 APs and 32 APs) and/or CSI information for a plurality of CSI-RS to PDSCH power offset values (e.g., -3 dB and 0 dB), for one CSI-RS resource or each of a plurality of CSI-RS resources within a CSI-RS resource set. The BS may reduce power consumption by determining the optimal number of APs and PDSCH transmit power/MCS based on the information in the CSI report. Therefore, this specification proposes a method of configuring CSI-RS resources and CSI-RS resource sets for reporting a plurality of a plurality of APs and/or a plurality of power offset values. A method of configuring a CSI report is proposed when CSI information for a plurality of APs and/or a plurality of power offset values is transmitted via a single CSI report. The power offset according to the existing NR system may mean 'powerControlOffset', an RRC parameter that indicates a power offset value between the PDSCH RE and the non-zero power (NZP) CSI-RS resource element (RE) (see Table 4).

In the present disclosure, the fact that the BS operates in an NES mode for ES may mean, for example, that the BS preconfigures a plurality of OFF intervals (DTX intervals of the BS) to turn off transmission of a specific DL signal for a specific time interval and dynamically indicates one of the OFF intervals to indicate that the corresponding DL signal may not be transmitted during a predefined time interval, thereby operating to obtain power consumption reduction of the BS and UE. It may also mean an operation mode that reduces power consumption of the BS and UE by not performing BWP switching, dynamic RB adaptation, and the like in the frequency domain as well as in the time domain and not performing transmission and/or reception through a specific reception antenna port of the BS when the BS turns of the corresponding reception antenna port semi-statically or dynamically in the spatial domain.

Table 4 is an excerpt from 3GPP TS 38.331 document, and Table 5 is an excerpt from 3GPP TS 38.214 document and illustrates RRC parameters for configuring NZP CSI-RS resources in the existing NR system. In particular, as seen from Tables 4 and 5, the powerControlOffset parameter is a parameter indicating a power offset between PDSCH REs and NZP CSI-RS REs.

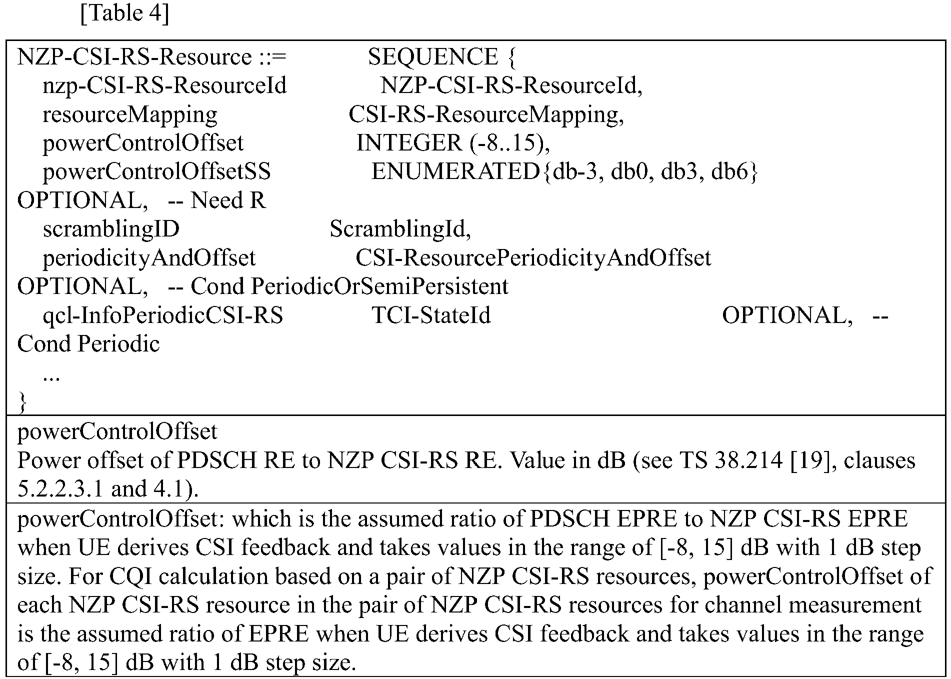

**[Table 5]**

| |
|---|
| powerControlOffset: which is the assumed ratio of PDSCH EPRE to NZP CSI-RS EPRE when UE derives CSI feedback and takes values in the range of [-8, 15] dB with 1 dB step size. For CQI calculation based on a pair of NZP CSI-RS resources, powerControlOffset of each NZP CSI-RS resource in the pair of NZP CSI-RS resources for channel measurement is the assumed ratio of EPRE when UE derives CSI feedback and takes values in the range of [-8, 15] dB with 1 dB step size. |
| powerControlOffsetSS: which is the assumed ratio of NZP CSI-RS EPRE to SS/PBCH block EPRE. |

The UE may know SSB transmit power of a serving BS through an RRC parameter ss-PBCH-BlockPower. The UE may know the CSI-RS transmit power (per CSI-RS resource) of the serving BS through the RRC parameter powerControlOffsetSS. The BS may adjust the transmit power of the PDSCH or adjust the MCS based on a CQI in the CSI report of the UE. When the UE receives a CSI-RS transmitted by the BS, the UE may calculate and report the CQI based on powerControlOffset in a CSI-RS resource configuration assuming that the PDSCH is power boosted or power reduced. Therefore, the UE calculates and reports the CSI assuming that there is a power fluctuation equal to an offset value compared to power of the CSI-RS actually received. The BS may adjust the power and MCS of the PDSCH appropriately based on the reported information or schedule the PDSCH by using the existing configuration without adjusting them (up to gNB implementation). If CSI information corresponding to a plurality of power offset values and/or the number of APs may be configured and/or instructed to be transmitted through a single CSI report, the BS does not need to perform RRC reconfiguration with relatively large delay or to receive a plurality of CSI reports for each of the plurality of power offset values and/or the plurality of APs to change the power offset values and/or the number of APs within a CSI-RS resource or a set of CSI-RS resources. Instead, the BS receives a plurality of power offset values and/or CSI reports for APs at once and uses the received CSI reports to quickly adjust downlink power and/or adjust the number of APs. Through this, energy saving effects of the BS may be obtained. For convenience, this specification mainly describes a method of configuring a CSI-RS resource and CSI-RS resource set for a plurality of power offset values and a method of configuring/reporting CSI for a plurality of power offset values. However, this may also be applied to the method of configuring the CSI-RS resource and the CSI-RS resource set for the number of APs, and the method of configuring/reporting CSI information for the number of APs. A plurality of power offset values and CSI information for APs may be transmitted together in a single CSI report.

### [Method #1] Method of configuring CSI-RS resource for CSI report for multiple power offset values and/or Aps

The BS may configure an NZP CSI-RS resource for the UE to receive a CSI report for a plurality of power offset values from the UE. In this case, the BS may configure a plurality of powerControlOffset values to the UE. Currently, powerControlOffset in the NZP-CSI-RS-Resource configuration may be configured to one of integers from -8 to 15. A plurality of powerControlOffset values may be configured for measuring and reporting the plurality of power offset values. For example, three power offset values may be included in a single CSI-RS resource configuration, such as powerControlOffset#1 = -3, powerControlOffset#2 = 0, and powerControlOffset#3 = 3.

Alternatively, the plurality of power offset values may be configured through a combination of one starting powerControlOffset value and RRC parameters related to stepSize. For example, when a powerControlOffset value in the NZP-CSI-RS-Resource configuration is -3 and the RRC parameter related to stepSize is 3, integers from -8 to 15 {-3, 0, 3, 6, 9, 12, 15} may be configured as a plurality of power offset values to be measured and reported. As another method, the plurality of power offset values may be configured via a specific RRC parameter (e.g. setOfpowerControlOffset) within the NZP CSI-RS resource configuration. For example, it may be configured to setOfpowerControlOffset={-3, 0, 3} separately from the powerControlOffset value in the NZP-CSI-RS-Resource configuration.

In the methods of configuring the plurality of power offset values described above, the BS may not always need to receive CSI reports for the plurality of power offset values. Therefore, one representative power offset value (or one of the power offset indices) may be configured/indicated in advance for the BS to receive a CSI report for a single power offset value in the same way as before depending on the situation. Alternatively, the representative power offset value may be agreed and/or configured to the lowest value, the highest value, or the median value from among the plurality of power offset values configured. Alternatively, the representative power offset value may be agreed and/or configured as a power offset value corresponding to the lowest index, the highest index, or the center index from among the plurality of power offset values configured. In normal times, a legacy operation (CSI report for a single power offset value) may be performed using a single representative value in the CSI-RS resource configuration and CSI reporting for a plurality of power offset values may be performed if there is an explicit (via group-common DCI or MAC-CE) or implicit (NES mode/state = ON) instruction. When the BS triggers CSI reporting for multiple power offset values, the UE may report CSI information for only some power offset values from among all power offset values that are pre-configured/instructed or defined in the standard. By selecting some of the power offset values configured in this case, the maximum number of power offsets to be included in the CSI report may be configured/indicated in advance. The UE may perform measurement and CSI reporting by selecting power offset values located within a certain range from the smallest power offset values, the largest power offset values, or the median value from among the configured power offset values.

### [Method #2] Method of configuring CSI-RS resource set for CSI reporting for multiple power offset values and/or APs and method of configuring CSI report

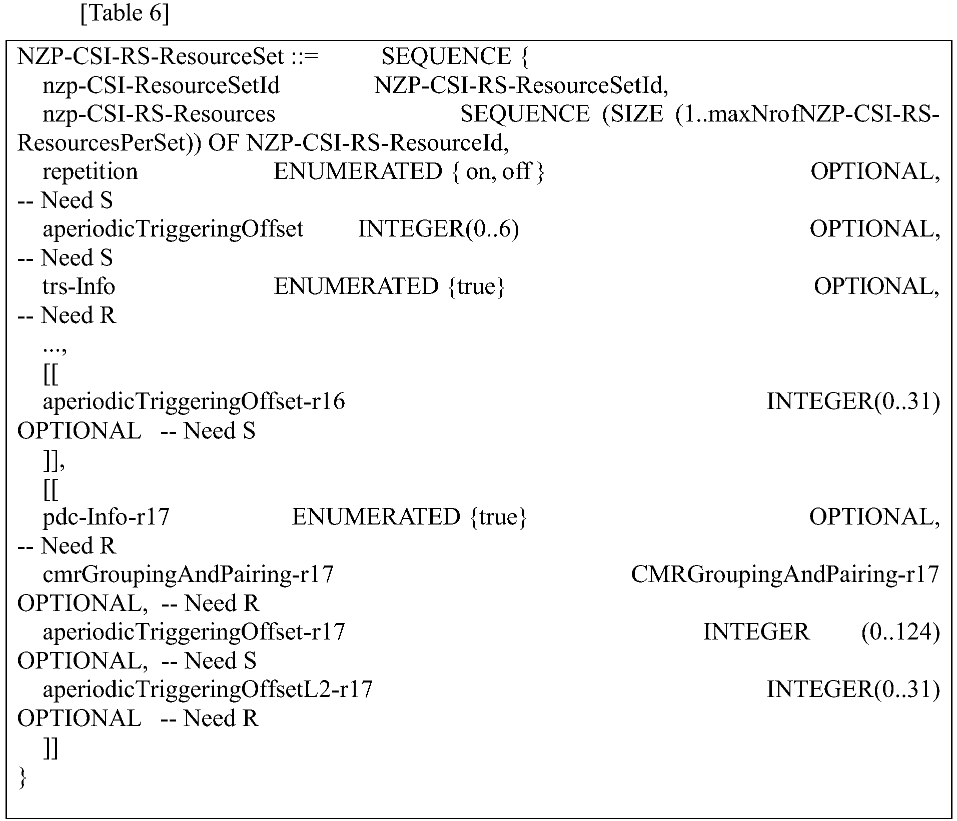

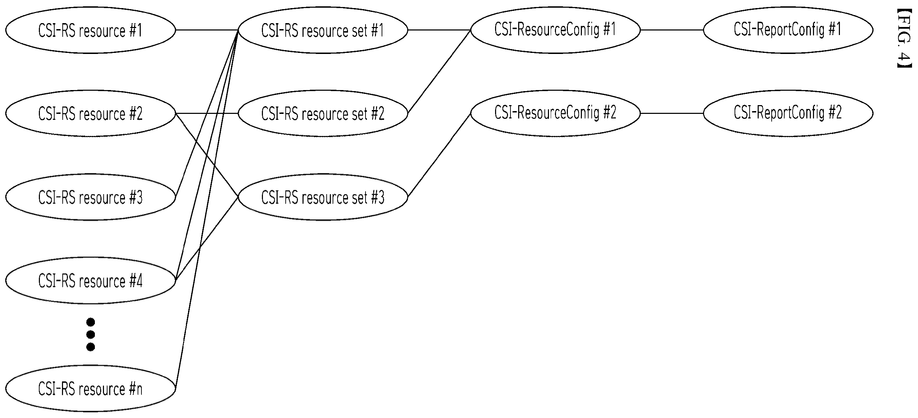

Referring to FIG. 4, one CSI-RS resource set may include single or multiple CSI-RS resources. When CSI reporting is triggered, one CSI-RS resource from among a plurality of CSI-RS resources in a CSI-RS resource set is selected, and CSI reporting is performed along with a CSI-RS resource index (CRI). Therefore, only CSI information for a single power offset value configured for the selected CSI-RS resource is reported.

Table 6 shows parameters in the NZP-CSI-RS-ResourceSet configuration. The corresponding configuration configures whether repetition is ON/OFF and trs-info. The RRC parameter trs-info indicates that the antenna port for all NZP-CSI-RS resources in the CSI-RS resource set is same. When parameter repetition is ON, it means that NZP CSI-RS is for beam management (BM). If the parameter trs-info is true, it means that the NZP CSI-RS is for tracking reference signal (TRS). Similarly, if a specific parameter (e.g., step size for powercontroloffset or powercontroloffset-R18) is included in the CSI-RS resource set configuration and the corresponding specific parameter is configured to ON or true, it may mean that the CSI-RS resource set is an NZP CSI-RS resource set for reporting CQI for a plurality of power offsets. When a specific CSI report is triggered, if a specific parameter is configured for a specific set of CSI-RS resources included in the CSI-ResourceConfig, the UE may recognize that the CSI report includes CSI for the plurality of power offset values. Alternatively, the UE may transmit CSI reports for the plurality of power offset values, based on explicit (group-common DCI or MAC-CE) or implicit (NES mode/state = ON) instructions from the BS.

In the following specification, methods of configuring a set of CSI-RS resources for CSI reporting for the plurality of power offset values are proposed.

### [Method #2-a] Method of configuring multiple power offset values for single or multiple CSI-RS resources in single CSI-RS resource set and including CSI information for multiple or part of power offsets in single CSI report #n (still only including one CRI)

A CSI-RS resource set may include a single or plurality of CSI-RS resources, and one of the methods proposed in [Method #1] may be applied to a single CSI-RS resource, and thus a plurality of power offset values may be configured for the UE. When only one CSI-RS resource is included in a CSI-RS resource set, the plurality of power offset values are configured for the CSI-RS resource. When a plurality of CSI-RS resources are included in a single CSI-RS resource set, the plurality of power offset values may be configured only for a specific CSI-RS resource, and only a single power offset value may be configured for the remaining CSI-RS resources. In this case, when CSI reporting for the plurality of power offset values is triggered, a CSI-RS resource with the plurality of power offset values set may be selected. Alternatively, even if a plurality of CSI-RS resources are included in a single CSI-RS resource set, there may be a plurality of CSI-RS resources with the plurality of power offset values configured. In this case, a single CSI-RS resource for CSI reporting for the plurality of power offset values may be determined based on previous (BS) configuration or instructions/definitions. Alternatively, the UE may perform CSI reporting by randomly selecting one of the CSI-RS resources with the plurality of power offset values configured.

### [Method #2-b] Method in which only one power offset value is still configured for each of multiple CSI-RS resources included in CSI-RS resource set, and CSI information for multiple CSI-RS resource indices is included in one CSI report #n

When a plurality of CSI-RS resources are configured within a CSI-RS resource configured, only one power offset value may be configured for each CSI-RS resource, as before. In the case of a normal CSI report (e.g., a normal BS operation mode, or non-NES mode), one CSI-RS resource may be selected as before and only CSI reporting for one power offset value may be performed. However, if the BS triggers CSI reporting for a plurality of power offset values (for example, if the NES mode of the BS is explicitly/implicitly configured/indicated, or if a specific parameter is configured in the CSI-RS resource set), measurement and reporting may be performed for each of the power offset values configured for the CSI-RS resources in the CSI-RS resource set. This is a method of performing CSI reporting for a plurality of power offset values by combining all power offset values configured for each CSI-RS resource within a CSI-RS resource set. In this case, the power offset values of all CSI-RS resources within the CSI-RS resource set may be included in one CSI report, depending on the configuration, instruction, or definition of the BS. Alternatively, CSI reporting may be performed that includes power offset values of some (at least one) of (N) CSI-RS resources that are preconfigured/agreed or randomly selected by the UE. Alternatively, the BS may directly indicate candidates for the power offset values, and the CSI report may include only CSI corresponding to the power offset values corresponding to the corresponding candidates. When CSI-RS resources are selected, CSI-RS resource indices having different configured power offset values may be selected.

When CSI information for the plurality of power offset values configured for single or plurality of CSI-RS resources or a plurality of numbers of APs is included in one CSI report n through [Method #1], [Method #2-a] or [Method #2-b], a new method of configuring a CSI report may be required.

**[Table 7]**

| CSI report number | CSI fields |
|---|---|
| CSI report #n | CRI as in Tables 6.3.1.1.2-3/4, if reported |
| | Rank Indicator as in Tables 6.3.1.1.2-3/4, if reported |
| | Layer Indicator as in Tables 6.3.1.1.2-3/4, if reported |
| | Zero padding bits O p, if needed |
| | PMI wideband information fields X_1, from left to right as in Tables 6.3.1.1.2-1/2, if reported |
| | PMI wideband information fields X_2, from left to right as in Tables 6.3.1.1.2-1/2, or codebook index for 2 antenna ports according to Clause 5.2.2.2.1 in [6, TS 38.214], if reported |
| | Wideband CQI for the first TB as in Tables 6.3.1.1.2-3/4, if reported |
| | Wideband CQI for the second TB as in Tables 6.3.1.1.2-3/4, if reported |

Table 7 is an example of a method of configuring CSI part 1 in the existing CSI report #n and corresponds to Table 6.3.1.1.2-7 of the 3GPP TS 38.212 'Mapping order of CSI fields of one CSI report, pmi-FormatIndicator=widebandPMI and cqi-FormatIndicator=widebandCQI or reportQuantity set to 'cri-RI-CQI' and cqi-FormatIndicator=widebandCQI'. Table numbers in Table 7 represent table numbers within 3GPP TS 38.212. Referring to Table 7, CSI part 1 may be configured with CRI + rank indicator (RI) + layer indicator (LI) + precoding matrix index (PMI) + channel quality indicator (CQI) for first TB.

However, if CQI information for a plurality of power offset values and/or the number of a plurality of APs is configured in one CSI report, the CQI value included in the CSI report corresponds to a certain CSI-RS resource, and a mapping order and location need to be agreed in advance between the UE and the BS. Alternatively, the UE may need to indicate a CSI-RS resource corresponding to the CQI value directly included in the CSI report. To be more general, for example, when RI/PMI and the like are configured in a CSI report for power offset values #1 and #2 (or 64 ports for AP #1 and 32 ports for AP #2), a rule may be needed, such as whether elements (RI, LI, PMI, CQI) corresponding to each power offset value (or a plurality of AP numbers) are alternately located after the common CRI or whether elements corresponding to one power offset value (or number of APs) are located first followed by values corresponding to other power offset values (or other numbers of APs). Similarly, when CSI reporting is configured for a plurality of CSI-RS resources configured with one power offset value (or one number of APs), a rule may be needed as to whether the plurality of CRIs are sequentially located first and then elements corresponding to the power offset value (or the number of APs) for each CRI are sequentially located or the elements corresponding to the first CRI and the power offset value (or the number of APs) related with the first CRI are located and then the elements corresponding to the next CRI and the power offset value (or the number of APs) related with the next CRI are located.

Therefore, when CSI reporting is configured for a plurality of power offset values (or the number of a plurality of APs) configured for one CSI-RS resource, as in method #2-a, the following methods may be considered.
1) CRI + RI#1 + LI#1 + PMI#1 + CQI#1 for 1st TB + RI#2 + LI#2 + PMI#2 + CQI#2 for 1st TB
2) CRI + RI#1 + RI#2 + LI#1 + LI#2 + PMI#1 + PMI#2 + CQI#1 for 1st TB + CQI#2 for 1st TB
3) Method of adding power offset indicator (PI): CRI + PI (indicates n and m from among a plurality of power offset values) + RI#n + LI#n + PMI#n + CQI#n for 1st TB + RI#m + LI#m + PMI#m + CQI#m for 1st TB

For Method #2-b, CSI reporting for a plurality of CSI-RS resources with one power offset value (or one number of APs) configured needs to be configured, the following methods may be considered.
1) CRI#1 + RI#1 + LI#1 + PMI#1 + CQI#1 for 1st TB + CRI#2 + RI#2 + LI#2 + PMI#2 + CQI#2 for 1st TB
2) CRI#1 + CRI#2 + RI#1 + LI#1 + PMI#1 + CQI#1 for 1st TB + RI#2 + LI#2 + PMI#2 + CQI#2 for 1st TB
3) CRI#1 + CRI#2 + RI#1 + RI#2 + LI#1 + LI#2 + PMI#1 + PMI#2 + CQI#1 for 1st TB + CQI#2 for 1st TB

Here, a payload size of CSI Part 1 needs to be constant, and thus the number of pieces of information to be included in one CSI report may be configured/indicated/agreed in advance. If the number of pieces of information to be included is not pre-determined or defined (or may change dynamically), then CSI Part 1 may only contain information about "how many" pieces of information are included. Alternatively, only a specific piece of information (such as CQI for 1st TB when there are 2 TB) may be included in CSI Part 1, and the remaining information may be transmitted in CSI Part 2. The content to be included in a single CSI report may be adjusted by the BS directly configuring/instructing specific CSI-RS index(es) or power offset value (or range of power offset values desired by the BS).

If CSI information for a plurality of power offset values (or the number of a plurality of APs) as described above is configured as a single CSI report, a payload size may become significantly larger than a CSI report configured with CSI information for a single power offset value and the number of a single AP, and thus a feedback overhead may increase. If the BS configures/instructs one of the following methods of 1) configuring a CSI report with only partial information (not full information) for each power offset value (or number of APs) (for example, configuring a CSI report by including all CRI/RI/LI/PMI/CQI information for 64 APs and including only CRI/CQI for 32 APs), 2) increasing the (frequency) size of the CSI measurement resource compared to before, 3) reducing the number of bits per CQI (or PMI) compared to before, or 4) configuring full information only for a specific power offset value (or number of APs) and only partial information for the remaining power offset values (or numbers of APs), a CSI report (for example, a CSI report for NES) containing CSI information for a plurality of power offset values (or the number of a plurality of APs) may have a feedback overhead similar to that of the existing CSI report containing CSI information for a single power offset value and the number of a single AP.

### [Method #3] Method of receiving CSI information as single CSI report assuming multiple power offset values configured for NZP CSI-RS resources (sets) belonging to specific group through grouping of NZP CSI-RS resources (sets) and group-level ON/OFF switching

In a first method, when a group index is configured for each of a plurality of CSI-ReportConfigs with different power offsets, switching between groups may be performed via DCI or medium access control - control element (MAC-CE). A plurality of CSI-ReportConfigs may be configured, and a corresponding group index may be configured for each CSI-ReportConfig(s). For example, CSI-ReportConfigId 0 and 1 is configured for group index 0 and CSI-ReportConfigId 2 and 3 is configured for group index 1. CSI-ReportConfig(s) corresponding to group index 0 may be related with a CSI-RS resource with a single power offset and CSI-ReportConfig(s) corresponding to group index 1 may be related with a CSI-RS resource with a plurality of power offsets. When the BS turns off group index 0 and turns on 1, the UE may perform CSI reporting for the plurality of power offsets in the CSI-RS resource linked to group index 1 and the BS may save power by adjusting power of the PDSCH based on the CSI reporting.

A method of configuring a group index for each CSI-ReportConfig(s) may minimize changes in the structure of existing RRC parameters but has a disadvantage of increasing RRC signaling overhead. By considering this, in a second method, when a group index is configured for each set of a plurality of CSI-RS resources with different power offset values within one CSI-ReportConfig, inter-group switching may be performed via the DCI or the MAC-CE. For example, a UE may be configured with two CSI-RS resource sets (CSI-RS resource sets #1 and #2) in advance for channel measurement within one CSI-ReportConfig. The group index of each resource set may be configured to 0 and 1. In this case, CSI-RS resource set #1 includes CSI-RS resource(s) with a single power offset. CSI-RS resource set #2 includes CSI-RS resource(s) with single or a plurality of power offsets. The UE performs the same CSI reporting behavior as before for group index 0. When the BS instructs switching to group index 1 through DCI or MAC-CE, the UE may select a CSI-RS resource with the plurality of power offsets within the CSI-RS resource set #2 or perform CSI reporting for the plurality of power offsets by combining the respective power offsets of the plurality of CSI-RS resources.

In a third method, when a group index is configured for each of a plurality of CSI-RS resources with different power offset values configured in a set of CSI-RS resources configured in CSI-ReportConfig, switching between groups may be performed with a DCI or a MAC-CE. For example, the UE may be configured to group index 0 for some CSI-RS resource(s) within a CSI-RS resource set, and group index 1 for the remaining CSI-RS resource(s). Group index 0 may include CSI-RS resource(s) with a single power offset, and group index 1 may include CSI-RS resource(s) with a plurality of power offsets. When the BS indicates group index 0 through a DCI or a MAC-CE, the UE selects one of the CSI-RS resource(s) with a single power offset value within the CSI-RS resource set, calculates CSI information assuming a single power offset value in the same way as before, and performs CSI reporting. When the BS instructs switching to group index 1 through DCI or MAC-CE, the UE selects one of the CSI-RS resources having a plurality of power offsets within the CSI-RS resource set, and configures CSI information calculated by assuming a plurality of power offset values as a single CSI, or performs CSI reporting by calculating CSI information for a plurality of power offset values configured by combining power offset values configured in the CSI-RS resources (duplicate values may be excluded).

### [Method #5] Method of transmitting single or multiple CSI reports by measuring single or multiple different AP number/power offset values through relative AP number and/or relative power offset values indicated through (group-common) DCI/MAC-CE or separately configured AP number/power offset value, while maintaining AP number/power offset values configured in existing CSI-RS resource configuration as reference (default) configuration

The BS may receive CSI reports calculated for various AP numbers and/or power offset values from the UE and determine which AP number and/or transmission power is appropriate to adjust the number of APs or transmit power for energy saving. Therefore, to receive CSI information for a value other than the number of APs and/or power offset value configured in the CSI-RS resources of the UE or for the number of a plurality of APs and/or power offset values, the BS may directly configure the number of the plurality of APs and/or a plurality of power offset values in the NZP CSI-RS resource configuration as in [Method #1].

As another method, the number of APs and the power offset values configured in the existing CSI-RS resources are considered as a reference value, and one of the candidates for the relative offset values configured in advance based on the reference value is indicated through a group common or UE specific DCI/MAC-CE, thereby allowing other single/number of multiple APs and/or power offset values to be configured/indicated other than the currently configured number of APs and/or power offset values.

For example, if the relative offset values for the number of APs, AP_offset = {4, 8, 12, 15}, and the relative offset values for the power offset value, POWER_offset = {-2, 1, 1, 2}, are configured as candidate sets in RRC, single or multiple relative offset values may be indicated for the number of APs and/or the power offset value, respectively, through group common or UE specific DCI/MAC-CE. A candidate set of AP_POWER_offset = {(4, -2), (8, 1), (12, 1), (15, 2)} may also be configured by combining the AP_offset value and the power_offset value. To indicate the number of multiple APs and power values, a candidate set may be configured, such as AP_offset={(4, 8), (8, 12), (12, 15), (4, 15)}. The relative difference in the number of APs may be given as a relative offset value for the number of APs. Alternatively, the number of reference APs originally configured for the CSI-RS resource may be changed/added through a scaling factor less than 1 (scaling factor <1). When a scaling factor is specified, a value after scaling may not be an integer, and thus the number of APs may be updated by performing a ceiling or floor operation on the value after scaling according to preconfiguration.

For example, when the number of reference APs of the CSI-RS resource configured for the UE is 16 and the reference power offset value is 0, if the BS indicates 00 through a field for indicating AP_offset in DCI and indicates 00 through a field for indicating POWER_offset, the number of APs of the UE may be configured to 12 and the power offset value may be configured to -2 dB. The UE may report CSI information calculated based on the changed number of APs and power offset values according to BE configuration/instruction. Alternatively, the reference AP number and reference power offset values are always included in the CSI report by default, and CSI calculated assuming the number of a plurality of APs and power offset values may be transmitted as one (or multiple) CSI reports.

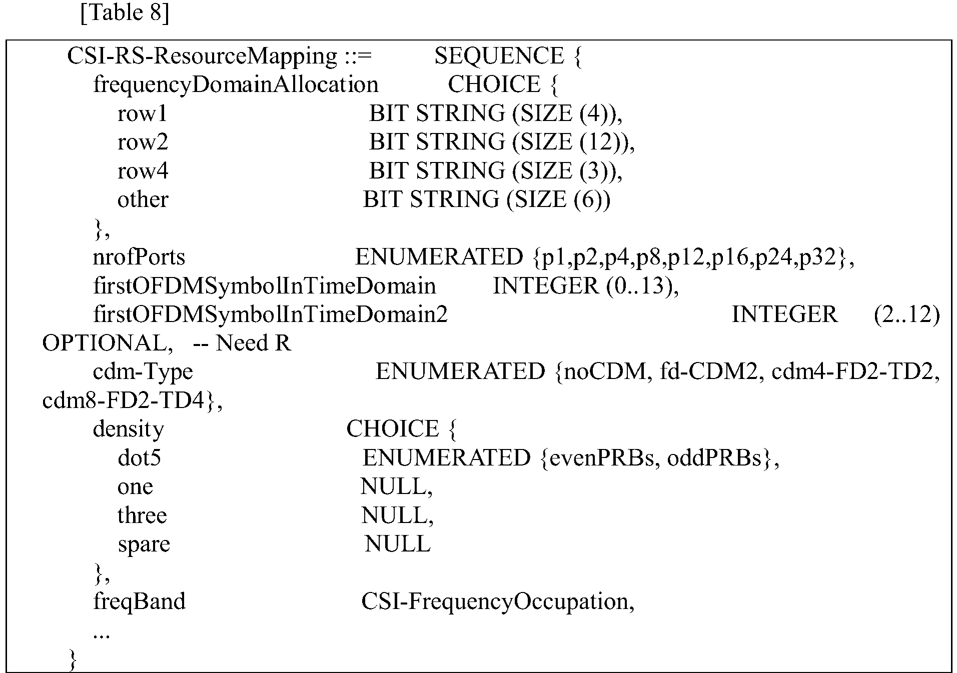

The BS may configure the CSI-RS-ResourceMaping configuration itself to change the number of APs of CSI-RS resources or to configure/instruct a plurality of AP numbers. Alternatively, the BS may configure a candidate set of nofPorts/powerControlOffset values themselves as separate RRC parameters in advance to change the number of APs for CSI-RS resources or configure/indicate the number of a plurality of APs, and dynamically update (change/add) the number of APs and power offset values through group common or UE-specific DCI/MAC-CE. For example, nofPorts-r18 = {p1, p2, p4, p8} and/or powerControlOffset = {-4, -2, +2, +4} may be configured respectively. Alternatively, a candidate set of combinations of AP number and power offset values may be configured: set nofPorts_powerControlOffset-r18 = {(-4, p1), (-2, P2), (+2, P4), (+4, P8)}. Alternatively, a candidate set such as nofPorts-r18={(p1, p2), (p2, p4), (p4, p8), (p2, p8)} may be preconfigured, and one of the candidates in the candidate set may be dynamically indicated via a group common or UE specific DCI/MAC-CE.

When an update of a single and/or the number of a plurality of APs and/or power offset value(s) is instructed through a group common or UE specific DCI/MAC-CE in the methods, a single instruction value may be applied to all CSI-RS resources within all CSI reporting configurations of a UE. Alternatively, a single instruction value may be applied to all CSI-RS resources belonging to a particular CSI reporting configuration of a UE. Alternatively, a single instruction value may be applied to a specific CSI-RS resource (set) belonging to a specific CSI reporting configuration of a terminal.

However, when the number of APs and the power offset value are dynamically updated (changed/added) through the methods, only a subset including values smaller than the number of reference APs and/or reference power offset values initially configured in the CSI-RS resource of the UE is configured as a candidate set, and an update may be configured/instructed based on the configured candidate set. Based on the resources set through the frequency domain allocation and time domain allocation of the initially configured CSI-RS-Resourcemapping, the candidate set of values to be updated and/or the update instruction may include only a subset of the initially configured resources.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

### Implementation Examples

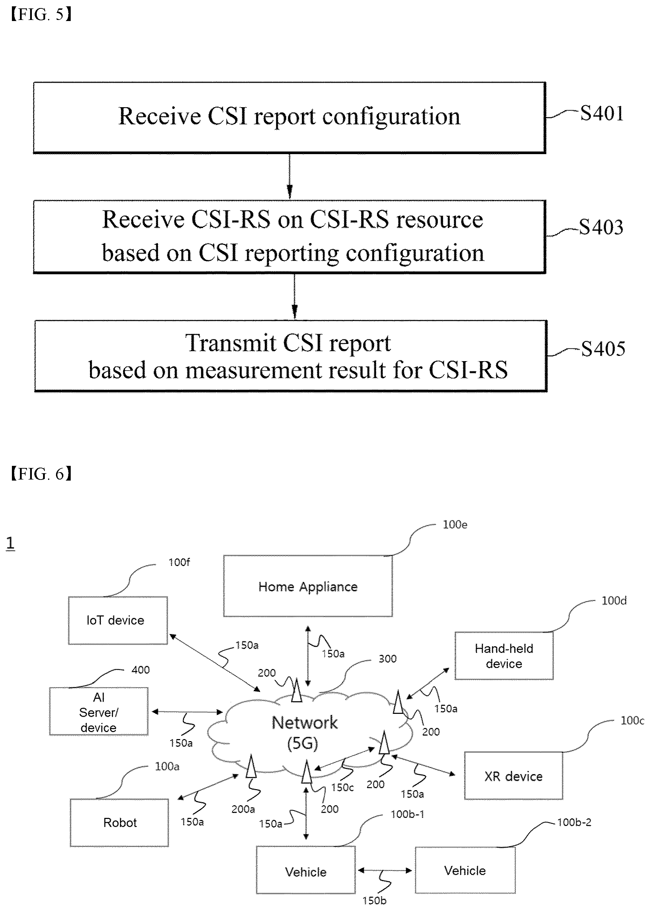

FIG. 5 is a flowchart of a signal transmission and reception method according to embodiments of the present disclosure.

Referring to FIG. 5, embodiments of the present disclosure may be performed by a UE and may include receiving a CSI reporting configuration (S401), receiving a CSI-RS on a CSI-RS resource based on the CSI reporting configuration (S403), and transmitting a CSI report based on a measurement result for the CSI-RS (S405).

In addition to the operation of FIG. 5, one or more of the operations described in Section 1 may be additionally performed.

The CSI reporting configuration of FIG. 5 may be the RRC parameter CSI-ReportConfig described in FIG. 4 and related descriptions. Therefore, the CSI reporting configuration may include one or more CSI-RS resource set configurations. Table 6 illustrates an example of a CSI-RS resource set configuration to be configured via RRC signaling. Referring to Table 6, one CSI-RS resource set configuration may include one or more CSI-RS resource configurations. Table 4 illustrates CSI-RS resource configurations to be configured via RRC signaling.

Referring to Table 4 and the related description, a BS of the existing NR system may adjust PDSCH transmission power based on CQI in a CSI report of a UE. When the UE receives the CSI-RS transmitted by the BS, the UE calculates and reports the CQI based on the powerCotorlOffset parameter in the CSI-RS resource configuration assuming that the PDSCH is power boosted or power reduced. In this specification and claims, the powerControlOffset parameter may be referred to as a first parameter. Referring to Tables 4 and 5, a first parameter indicates a ratio of PDSCH EPRS to CSI RS EPRE. Therefore, the UE derives the CQI assuming the PDSCH to CSI-RS EPRE ratio for the CSI-RS resource in which the CSI-RS is received, and transmits the CQI in the CSI report.

In this regard, Method #5 discloses a method of adding a plurality of relative power offset values while maintaining the first parameter. Referring to Method #5, a plurality of candidates for relative power offset values may be configured via RRC signaling. The name of the parameter for indicating the relative power offset value may be PowerOffset. In this specification and claims, the powerOffset parameter may be referred to as a second parameter. The UE may regard a value of the first parameter as a reference value and assume a value obtained by subtracting a value indicated by the second parameter from a value indicated by the first parameter as a power offset value.

Therefore, when the second parameter is configured, the UE derives a CQI by assuming a ratio of a PDSCH to CSI-RS EPRE for the CSI-RS resource in which the CSI-RS is received as a value obtained by subtracting the second parameter from the first parameter and transmits the CQI in the CSI report.

In Method #5, CSI reporting may be performed for a plurality of relative power offset values. In this specification, the UE may transmit a plurality of CSI reports for a plurality of differently assumed power offset values through a single transmission opportunity.

In the existing NR system, one CSI report index (e.g., CSI report #n, where n is a positive integer) is assigned to one CSI-RS resource configuration. To distinguish the concepts, in this specification, CSI reports including each CQI derived by configuring a plurality of power offsets with respect to a single CSI-RS resource configuration, such as relative power offset values, may be referred to as sub-reports (or CSI sub-reports). The sub-reports are related with one CSI-RS resource configuration, and thus it may be understood that when a plurality of power offset values are configured, a plurality of CSI sub-reports are included in one CSI report.

In summary, when the UE performs the operation of FIG. 5, if only the first parameter is configured for CSI-RS resource configuration, the UE derives CQI by assuming a ratio of PDSCH EPRE to CSI-RS EPRE for CSI-RS resources as the value of the first parameter, as in the related art, and transmits the derived CQI in the CSI report. When the first parameter and the second parameter are configured for CSI-RS resource configuration, the UE derives the CQI by assuming the ratio of PDSCH EPRE to CSI-RS EPRE for the CSI-RS resource to be a value corresponding to a difference between the first parameter and the second parameter. There may be a plurality of values corresponding to the second parameter, and thus the number of derived CQIs may correspond to the number of configured second parameter values. For the derived CQIs, one CQI may be included in one sub-report.

Therefore, based on the CSI report including sub-reports, in deriving the CQI of each of the sub-reports, the ratio of PDSCH EPRE to CSI-RS EPRE for the CSI-RS resource is assumed to be equal to the difference between the first parameter and the second parameter. Based on the fact that the CSI report does not include the sub-reports, in deriving the CQI of the CSI report, the ratio of PDSCH EPRE to CSI-RS EPRE for the CSI-RS resource is assumed to be the value of the first parameter.

Referring to the above descriptions of the specification, the operation of including a plurality of sub-reports in one CSI-report based on a plurality of parameter values may also be applied to the number of APs.

Referring to Table 8 of Method #5, a BS of the existing NR system may indicate the number of APs assumed to derive CQI through nrofPorts in CSI-RS-ResourceMapping, which is an RRC parameter. When the UE receives the CSI-RS transmitted by the BS, the UE assumes the number of APs based on a third parameter in the CSI-RS resource configuration, derives the CQI, and includes the derived CQI in the CSI report and transmits the CQI. In this specification and claims, nrofPorts may be referred to as the third parameter.

In this regard, Method #5 discloses a method of adding the numbers of a plurality of relative APs while maintaining the third parameter. Referring to Method #5, candidates for the number of a plurality of relative APs may be configured via RRC signaling. The name of the parameter to indicate the number of relative APs may be port-subsetIndicator. In this specification and claims, the port-subsetIndicator parameter may be referred to as a fourth parameter. The UE may regard the value of the third parameter as a reference value, change the value indicated by the third parameter based on the fourth parameter, and assume the changed value as the number of APs.

As a specific example, if the number of APs is indicated by the third parameter, the fourth parameter may indicate a subset including values smaller than the number of APs configured by the third parameter. Conventionally, the third parameter may indicate the number of APs as one of 2, 4, 8, 12, 16, 24, and 32. If the number of APs is configured to 32 by the third parameter, the fourth parameter may indicate APs that are actually used for CQI calculation (or CSI calculation including the CQI) from among the 32 APs in the form of a subset of the 32 APs.

In summary, based on the fact that the CSI report does not include the sub-reports, in deriving the CQI of the CSI report, the number of antenna ports for the CSI-RS resource is configured to the value of the third parameter. Based on the CSI report including the sub-reports, in deriving the CQI of each of the sub-reports, the number of antenna ports for the CSI-RS resource is configured by changing the value of the third parameter based on the fourth parameter.

By using reference parameters (first and third parameters) and relative parameters (second and fourth parameters), when transmitting and receiving CSI reports for a plurality of power offset values between the UE and the BS, the primary and secondary configurations are distinguished, and thus when the UCI payload size is insufficient, the UE may perform flexible operations such as determining priorities for each CSI sub-report or performing CSI reporting based only on the primary configuration.

Referring to Method #2, the existing CSI report may include CSI fields (CRI, RI, LI, PMI, CQI, and the like) in the order as shown in Table 7. Method 2# discloses a mapping order of CSI fields for each sub-report when there are a plurality of power offset values or the number of APs for CSI-RS resource configuration (including cases in which there are reference parameters and relative parameters as in Method #5), i.e., when CSI report #n includes sub-reports. Referring to one of Method #2-b, the sub-reporting CSI fields may be arranged in the order 'CRI#1 + RI#1 + LI#1 + PMI#1 + CQI#1 for 1st TB + CRI#2 + RI#2 + LI#2 + PMI#2 + CQI#2 for 1st TB'. This means that, characteristically, the order of the CSI fields for each sub-report is not intersected, and all the CSI fields of the CSI sub-report corresponding to the lowest index are included, followed by the CSI fields of the CSI sub-report corresponding to the next index. For example, RI#2, a CSI field included in CSI Sub-Report #2, is included in the CSI report after all CSI fields corresponding to CSI Sub-Report #1. The mapping order of the CSI fields of sub-report #n may be the same as the mapping order of the CSI fields of the existing CSI report (e.g., the order in Table 7).

In summary, the mapping order of the CSI fields of the CSI report is determined in a specific order based on the fact that the CSI report does not include the sub-reports. Based on the CSI report including the sub-reports, the sub-reports are included in the CSI report in ascending order of each sub-report index, and the mapping order of the CSI fields of one sub-report is determined in the specific order within the one sub-report.

If the mapping order of CSI fields in sub-reports is not intersected, the priority according to sub-report index may be reflected in omitting a specific sub-report from the CSI report if the UCI payload size is insufficient to include all sub-reports. For example, if the UCI payload size includes only 4 of the 5 sub-reports, when the CSI sub-report #5 corresponding to the highest index is omitted, there is no need to consider the positions of individual CSI fields within the sub-report, which may facilitate UE implementation.

In addition to the operations of FIG. 5, one or more of the operations described with reference to FIGS. 1 to 4 and the operations described with reference to section 1 may be also performed in combination.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

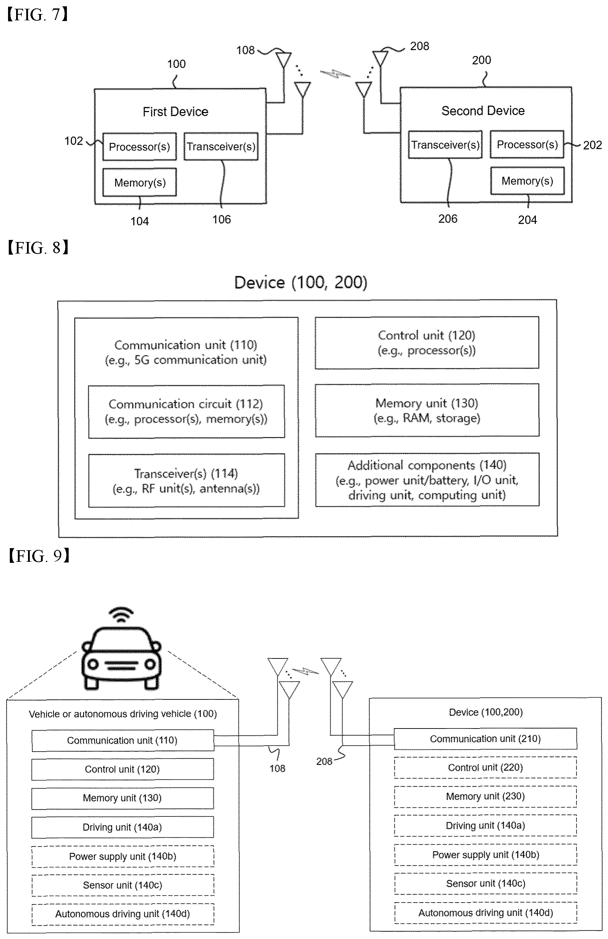

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving a signal by a user equipment (UE) in a wireless communication system, the method comprising:
receiving a channel state information (CSI) reporting configuration;
receiving a CSI-reference signal (CSI-RS) on a CSI-RS resource based on the CSI reporting configuration; and
transmitting a CSI report based on a measurement result for the CSI-RS,
wherein, based on the CSI report including sub-reports, in deriving a channel quality indicator (CQI) of each of the sub-reports, a ratio of a physical downlink shared channel (PDSCH) energy per resource element (EPRE) to CSI-RS EPRE for the CSI-RS resource is assumed to be equal to a difference between a first parameter and a second parameter, and
based on that the CSI report does not include the sub-reports, in deriving the CQI of the CSI report, the ratio of the PDSCH EPRE to the CSI-RS EPRE for the CSI-RS resource is assumed to be a value of the first parameter.

2. The method of claim 1, wherein one first parameter is configured for the CSI-RS resource, and
for the sub-reports, one second parameter is configured per sub-report.

3. The method of claim 1, wherein, based on that the CSI report does not include the sub-reports, in deriving the CQI of the CSI report, a number of antenna ports for the CSI-RS resource is configured to a value of the third parameter, and
based on the CSI report including the sub-reports, in deriving the CQI of each of the sub-reports, the number of antenna ports for the CSI-RS resource is configured by changing the value of the third parameter based on the fourth parameter.

4. The method of claim 3, wherein the third parameter indicates the number of antenna ports for the CSI-RS resource, and
the fourth parameter indicates an antenna port to be used for CSI calculation from among the number of antenna ports indicated by the third parameter.

5. The method of claim 1, wherein, based on that the CSI report does not include the sub-reports, a mapping order of CSI fields of the CSI report is determined in a specific order, and
based on the CSI report including the sub-reports, the sub-reports are included in the CSI report in ascending order of each sub-report index, and the mapping order of the CSI fields of one sub-report is determined in the specific order within the one sub-report.

6. A user equipment (UE) for transmitting and receiving a signal in a wireless communication system, the UE comprising:
at least one transceiver;
at least one processor; and
at least one memory operably connected to the at least one processor and storing instructions that, when executed, cause the at least one processor to perform a specific operation,
wherein the specific operation includes:
receiving a channel state information (CSI) reporting configuration;
receiving a CSI-reference signal (CSI-RS) on a CSI-RS resource based on the CSI reporting configuration; and
transmitting a CSI report based on a measurement result for the CSI-RS,
based on the CSI report including sub-reports, in deriving a channel quality indicator (CQI) of each of the sub-reports, a ratio of a physical downlink shared channel (PDSCH) energy per resource element (EPRE) to CSI-RS EPRE for the CSI-RS resource is assumed to be equal to a difference between a first parameter and a second parameter, and
based on that the CSI report does not include the sub-reports, in deriving the CQI of the CSI report, the ratio of the PDSCH EPRE to the CSI-RS EPRE for the CSI-RS resource is assumed to be a value of the first parameter.

7. The UE of claim 6, wherein one first parameter is configured for the CSI-RS resource, and
for the sub-reports, one second parameter is configured per sub-report.

8. The UE of claim 6, wherein, based on that the CSI report does not include the sub-reports, in deriving the CQI of the CSI report, a number of antenna ports for the CSI-RS resource is configured to a value of the third parameter, and
based on the CSI report including the sub-reports, in deriving the CQI of each of the sub-reports, the number of antenna ports for the CSI-RS resource is configured by changing the value of the third parameter based on the fourth parameter.

9. The UE of claim 8, wherein the third parameter indicates the number of antenna ports for the CSI-RS resource, and
the fourth parameter indicates an antenna port to be used for CSI calculation from among the number of antenna ports indicated by the third parameter.

10. The UE of claim 6, wherein, based on that the CSI report does not include the sub-reports, a mapping order of CSI fields of the CSI report is determined in a specific order, and
based on the CSI report including the sub-reports, the sub-reports are included in the CSI report in ascending order of each sub-report index, and the mapping order of the CSI fields of one sub-report is determined in the specific order within the one sub-report.

11. A device for a user equipment (UE), the device comprising:
at least one processor; and
at least one computer memory operably connected to the at least one processor and configured, when executed, to cause the at least one processor to perform operations, the operations comprising:
receiving a channel state information (CSI) reporting configuration;
receiving a CSI-reference signal (CSI-RS) on a CSI-RS resource based on the CSI reporting configuration; and
transmitting a CSI report based on a measurement result for the CSI-RS,
wherein, based on the CSI report including sub-reports, in deriving a channel quality indicator (CQI) of each of the sub-reports, a ratio of a physical downlink shared channel (PDSCH) energy per resource element (EPRE) to CSI-RS EPRE for the CSI-RS resource is assumed to be equal to a difference between a first parameter and a second parameter, and
based on that the CSI report does not include the sub-reports, in deriving the CQI of the CSI report, the ratio of the PDSCH EPRE to the CSI-RS EPRE for the CSI-RS resource is assumed to be a value of the first parameter.

12. A computer-readable nonvolatile storage medium comprising at least one computer program that causes the least one processor to perform operations, the operations comprising:
receiving a channel state information (CSI) reporting configuration;
receiving a CSI-reference signal (CSI-RS) on a CSI-RS resource based on the CSI reporting configuration; and
transmitting a CSI report based on a measurement result for the CSI-RS,
wherein, based on the CSI report including sub-reports, in deriving a channel quality indicator (CQI) of each of the sub-reports, a ratio of a physical downlink shared channel (PDSCH) energy per resource element (EPRE) to CSI-RS EPRE for the CSI-RS resource is assumed to be equal to a difference between a first parameter and a second parameter, and
based on that the CSI report does not include the sub-reports, in deriving the CQI of the CSI report, the ratio of the PDSCH EPRE to the CSI-RS EPRE for the CSI-RS resource is assumed to be a value of the first parameter.
